# EUROPEAN PATENT SPECIFICATION

(11) **EP 4 023 940 B1**
(45) Date of publication and mention of the grant of the patent: **04.11.2026**
(21) Application number: 21218240.6
(22) Date of filing: 29.12.2021
(51) Int. Cl.: F23D 14/66, F23D 14/78, F24H 9/1881, F24H 9/00, F24H 1/36, F24H 1/28

(54) **WATER HEATING APPARATUS**
WASSERERWÄRMUNGSVORRICHTUNG
APPAREIL DE CHAUFFAGE DE L'EAU

(30) Priority: 30.12.2020 KR 20200188123
(43) Date of publication of application: 06.07.2022
(73) Proprietor: Kyungdong Navien Co., Ltd., Pyeongtaek-si, Gyeonggi-do 17704 (KR)
(72) Inventor: PARK, Jun Kyu, 17704 Gyeonggi-do (KR); KIM, Dae Hyun, 17704 Gyeonggi-do (KR)
(74) Representative: Beck Greener LLP

(56) References cited:
- EP-A1- 2 947 388
- US-A- 4 751 913
- US-A1- 2016 370 030
- US-A1- 2019 041 092
- US-A1- 2020 348 047

## Description

### TECHNICAL FIELD

The present invention relates to a water heating apparatus.

### BACKGROUND

A water heating apparatus is an apparatus that heats water in a container to heat a desired area or form hot water by using the heated water to provide the hot water to a source of demand. Accordingly, to heat water, the water heating apparatus generally has a structure that may cause a combustion reaction by using a burner to generate flames and combustion gas and may heat the water by using heat transferred from the flames and heat transferred from the combustion gas.

The burner requires a fuel to cause a combustion reaction. The fuel may include a liquefied petroleum gas or a liquefied natural gas that is a kind of fossil fuel, but may include light oil or kerosene. The burner may generate flames in an interior of a combustion chamber, and a flue tube, in which combustion gas may flow along a direction, in which the flames are generated, may extend in the burner.

When a water heating apparatus, such as an oil boiler, using a burner that generates a small amount of a nitrogen oxide by using a fuel of an oil type, ignition may not be smoothly made for a reason, such as a lifting phenomenon, and imperfect combustion may occur so that the amount of nitrogen oxide may increase. In the case of imperfect combustion, there is a high possibility of forming yellow flames due to soot, and passage in the interior of the water heating apparatus including a flue tube provided such that the combustion gas may flow in a specific path may be blocked by soot so that a smooth operation of the water heating apparatus may be hindered. Furthermore, the flames directly face the flue tube and the flames may directly contact a heat exchanger including the flue tube, and in this case, noise may be generated due to boiling.

To solve the soot and boiling problems, the burner may be disposed not to face the flue tube below the water heating apparatus. However, soot still may be generated. Furthermore, when the water heating apparatus is positioned on a bottom surface of a building, excessive heat is applied to the bottom surface due to the heat of a burner disposed at a lower portion of the water heating apparatus, and thus castable that is heavy fire resistive cement has to be disposed on the bottom of the water heating apparatus.

US2020/348047 discloses an oil boiler including an outer container having openings at opposite ends, a combustion chamber that covers an opening at an upper end of the outer container and in which a combustion reaction occurs, a lower cover that covers an opening at a lower end of the outer container, a plurality of flue tubes to heat heating water flowing in the outer container by guiding combustion gas, a burner including a fuel nozzle that sprays fuel, an air nozzle that injects air, and a spark plug that ignites a mixture of the fuel and the air, and a flame tube part that defines a tube space by surrounding a partial space in which the mixture is ignited, the flame tube part including a flame tube having an open lower end and a recirculation hole formed through the flame tube such that the combustion gas is introduced into the flame tube.

US2016/370030 discloses a boiler system having a generally cylindrical housing or shell includes a main or fire tube with a furnace or combustion chamber extending longitudinally near the bottom of the housing and a burner to accomplish combustion within the combustion chamber. The combustion chamber opens at its rear end to furnace tube sheet, and to a first set of tubes extending longitudinally of the boiler. The first set of tubes extends to and through the rear tube sheet of the boiler to a turnaround space, which transitions to a second set of tubes located above the combustion chamber and first set of tubes to generally span a length extending from the rear tube sheet of the boiler to the front tube sheet.

US4751913 discloses apparatus such as a hot-water boiler for heating water. The apparatus has a combustion chamber and two or more heat exchangers that are disposed one above the other. The heat exchanger disposed in the bottom of the apparatus is associated with a condensation chamber. The heat exchanger of the condensation chamber is provided with a fresh air inlet and a fresh air outlet. Air is conveyed through this heat exchanger, whereupon it is heated up. This warmed air is supplied to the burner of the apparatus.

US2019/041092 discloses a water heater system including a primary heat exchanger including a tank and at least one flue, and a secondary heat exchanger including a core and a flue gas flow path. The water heater is operable in a heating mode in which a combustor produces hot flue gas and a water pump flows water through the core of the secondary heat exchanger and into the tank, and in a non-heating mode in which the combustor and the water pump are inoperative. The flue gas flows from the combustor through the at least one flue to heat the water in the tank and then through the flue gas flow path to heat water in the core before being exhausted.

EP2947388 discloses a combustion apparatus capable of reducing the combustion load of a burner and improving the combustion efficiency thereof. The combustion apparatus includes a premixing chamber for premixing external air, introduced through an air supply inlet, with a combustion gas; a blower for supplying a mixed air premixed in the premixing chamber toward a burner; a combustion chamber for burning the mixed air by ignition of the burner; a heat exchanger for heat exchange with room heating water by using the combustion heat of the combustion chamber; an exhaust gas discharging part for discharging an exhaust gas having passed through the heat exchanger; and a duct through which the exhaust gas having passed through the exhaust gas discharging part is discharged outside.

### SUMMARY

The invention is as defined in the claims. The present disclosure has been made to solve the above-mentioned problems occurring in the prior art while advantages achieved by the prior art are maintained intact.

An aspect of the present disclosure provides a water heating apparatus which alleviates blocking of a flue tube due to soot and has a reduced weight.

The technical problems to be solved by the present disclosure are not limited to the aforementioned problems, and any other technical problems not mentioned herein will be clearly understood from the following description by those skilled in the art to which the present disclosure pertains.

According to an aspect of the invention, a water heating apparatus is provided as defined in claim 1. In particular, the outer vessel includes a cylinder wall part having opened upper and lower surfaces, a lower tube plate coupled to the cylinder wall part while covering a lower end of the cylinder wall part and through which a lower end of the flue tube passes, and a burner guide having an opening that passes through the cylinder wall part along one direction that crosses an upward/downward direction and having a part that protrudes from the cylinder wall part. The combustion chamber is coupled to an upper end of the cylinder wall part, and the burner is coupled to the outer vessel and the combustion chamber through the burner guide.

According to another aspect of the invention, a water heating apparatus is provided as defined in claim 15. In particular, the water heating apparatus further comprises an insulation part coupled to the combustion chamber and configured such that the air to be supplied to the burner passes therethrough to insulate the combustion chamber, a discharge part coupled to the outer vessel, an air supply connection pipe connecting an insulation inlet of the insulation part and a duct adapter of the discharge part, and an air supply pipe connecting an insulation outlet of the insulation part and the burner to supply the air from the insulation part to the burner.

### BRIEF DESCRIPTION OF THE DRAWINGS

The above and other objects, features and advantages of the present disclosure will be more apparent from the following detailed description taken in conjunction with the accompanying drawings:
FIG. 1 is a perspective view of a water heating apparatus according to an embodiment of the present disclosure;
FIG. 2 is an exploded perspective view of a water heating apparatus according to an embodiment of the present disclosure;
FIG. 3 is a longitudinal sectional view of a water heating apparatus according to an embodiment of the present disclosure;
FIG. 4 is a perspective view illustrating an internal structure of an insulation part of a water heating apparatus such that the intemal structure is exposed to an outside according to an embodiment of the present disclosure;
FIG. 5 is an enlarged view of a portion of a longitudinal sectional view of a water heating apparatus according to an embodiment of the present disclosure;
FIG. 6 is an exploded perspective view of an insulation part of a water heating apparatus according to an embodiment of the present disclosure;
FIG. 7 is a perspective view of an air cooling plate of a water heating apparatus according to an embodiment of the present disclosure;
FIG. 8 is a view illustrating an insulation part when viewed from a top side to a bottom side while an upper plate thereof is removed according to an embodiment of the present disclosure;
FIG. 9 is a perspective view illustrating a cutting surface and an intemal structure of an insulation part after a portion of the insulation part is cut, according to an embodiment of the present disclosure;
FIG. 10 is an enlarged detailed view illustrating a portion of FIG. 9;
FIG. 11 is a perspective view illustrating a flame forming part of an oil boiler such that an intemal structure thereof is exposed, according to an embodiment of the present disclosure;
FIG. 12 is a perspective view illustrating a situation, in which a blower tube is disassembled from a flame forming part of an oil boiler, according to an embodiment of the present disclosure;
FIG. 13 is a longitudinal sectional view of a flame forming part of an oil boiler according to an embodiment of the present disclosure;
FIG. 14 is a perspective view illustrating a flame holder, an ignition plug, a fuel nozzle, and a flame forming cover of an oil boiler according to an embodiment of the present disclosure;
FIG. 15 is a bottom view of a flame forming part of an oil boiler according to an embodiment of the present disclosure;
FIG. 16 is a perspective view illustrating a flame holder of an oil boiler according to an embodiment of the present disclosure;
FIG. 17 is an exploded perspective view illustrating parts related to an air providing part in a burner of a water heating apparatus according to an embodiment of the present disclosure; and
FIG. 18 is an exploded perspective view of an air providing part of a water heating apparatus according to an embodiment of the present disclosure.

### DETAILED DESCRIPTION

Hereinafter, some embodiments of the present disclosure will be described in detail with reference to the exemplary drawings. Throughout the specification, it is noted that the same or like reference numerals denote the same or like components even though they are provided in different drawings. Further, in the following description of the present disclosure, a detailed description of known functions and configurations incorporated herein will be omitted when it may make the subject matter of the present disclosure rather unclear.

In addition, terms, such as first, second, A, B, (a), (b) or the like may be used herein when describing components of the present disclosure. The terms are provided only to distinguish the components from other components, and the essences, sequences, orders, and the like of the components are not limited by the terms. When it is described that one element is connected, coupled, or electrically connected to another element, the element may be directly connected or coupled to the other element, but a third element may be connected, coupled, or electrically connected between the elements.

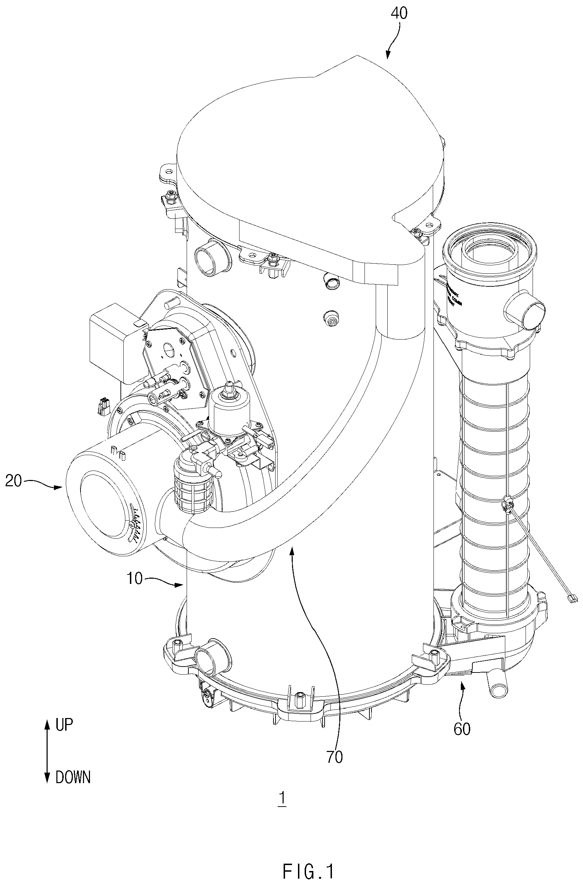

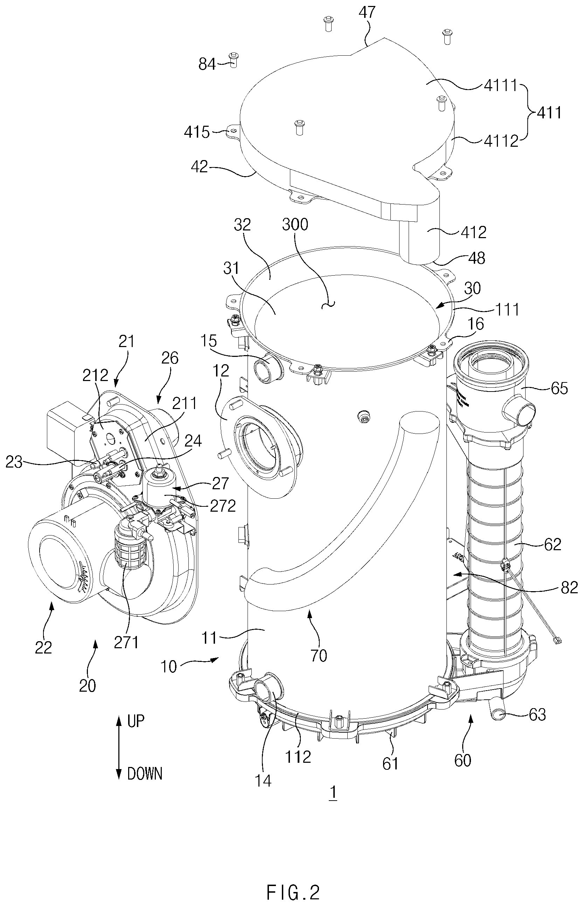

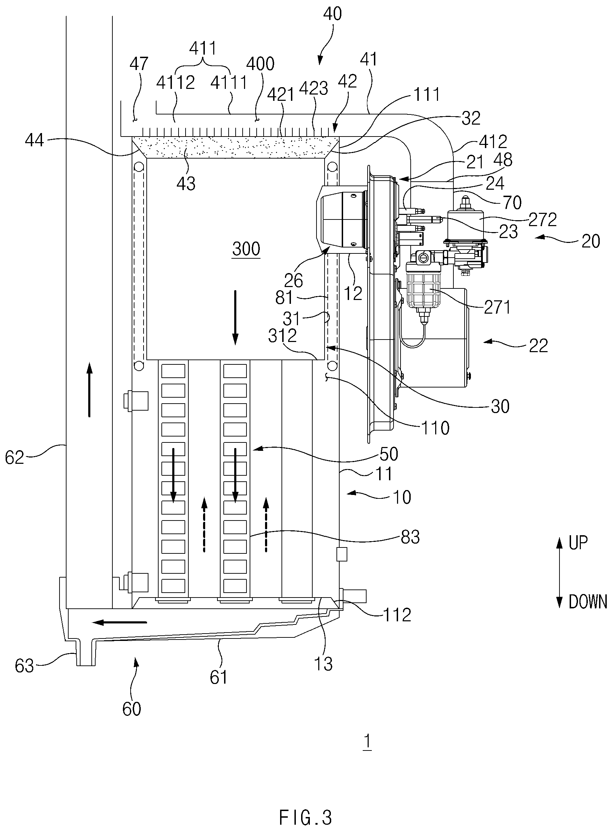

FIG. 1 is a perspective view of a water heating apparatus 1 according to an embodiment of the present disclosure. FIG. 2 is an exploded perspective view of the water heating apparatus 1 according to an embodiment of the present disclosure. FIG. 3 is a longitudinal sectional view of the water heating apparatus 1 according to an embodiment of the present disclosure.

Referring to the drawings, the water heating apparatus 1 according to the illustrated embodiment includes a burner 20, a combustion chamber 30, an outer vessel 10, a flue tube 50, and an insulation part 40. However, the directions are determined relatively with respect to a direction, in which the water heating apparatus 1 is arranged, and the upward/downward direction may not necessarily mean a vertical direction. A reference direction "D" is one direction that crosses an upward/downward direction, and it is illustrated in an embodiment that the reference direction is perpendicular to the upward/downward direction but the direction is not limited thereto.

The water heating apparatus 1 is an apparatus that generates heat and then heats heating water through exchange of heat between a combustion gas generated by the heat and water. The water heating apparatus 1 may include an outer box, and other elements of the water heating apparatus 1 may be accommodated in an interior of the outer box. The outer box may have a rectangular parallelepiped shape, but a shape thereof is not limited thereto.

### Outer Vessel 10

The water heating apparatus 1 includes the outer vessel 10. In the illustrated embodiment, the outer vessel 10 has a cylindrical shape having an opened upper surface. The outer vessel 10 includes a cylinder wall part 11 having opened upper and lower surfaces, and a lower tube plate 13 coupled to the cylinder wall part 11 while covering a lower end 112 of the cylinder wall part 11. The combustion chamber 30 and the insulation part 40 are coupled to an upper end 111 of the cylinder wall part 11. A burner guide 12 has an opening that passes through the cylinder wall part 11 along the reference direction "D", which crosses the upward/downward direction, and has a part that protrudes from the cylinder wall part 11 such that the burner 20 is coupled thereto. The blower tube 26, which will be described below, may be inserted through an opening formed at a center of the burner guide 12.

Water may flow in a hollow 110 surrounded by the cylinder wall part 11. The water that is to be heated may be introduced into the hollow 110 through an inlet 14 of an outer vessel located at a lower portion of the cylinder wall part 11 to flow upwards, may receive heat from a periphery of the flue tube 50 and a periphery of the combustion chamber 30 to be heated, and may be discharged through an outlet 15 of the outer vessel located at an upper portion of the cylinder wall part 11.

The water heating apparatus 1 according to an embodiment of the present disclosure may further include a hot water heat exchanger 81. The hot water heat exchanger 81 may be disposed in the hollow 110. The hot water heat exchanger 81 may be a coil type heat exchanger formed by winding a pipe in a spiral shape. The hot water heat exchanger 81 functions to heat direct water to produce hot water and provide the hot water to a source of demand so that the source of demand may use the hot water. The hot water heat exchanger 81 is configured to cause the received direct water to exchange heat with the heated water in the water heating apparatus 1 to produce hot water. Accordingly, the hot water heat exchanger 81 may be disposed in the hollow 110 and the direct water may flow in an interior thereof, whereby the heated water flowing in the hollow 110 and the direct water may exchange heat by a medium of the hot water heat exchanger 81. The hot water heat exchanger 81 may be formed of a spiral pipe that surrounds the combustion chamber 30. Accordingly, the hot water heat exchanger 81 may be disposed at an upper portion of the hollow 110. The hot water heat exchanger 81 may further surround the flue tube 50.

### Combustion Chamber 30

The combustion chamber 30 provides a combustion space 300 in which a combustion reaction is caused, and is provided on an upper side of an interior of the outer vessel 10.

The combustion chamber 30 may include an opening covered by the insulation part 40 on an upper side thereof. The insulation part 40 may be coupled to an upper end part 32 of the combustion chamber 30 while covering the opening. The combustion chamber 30 may include a cylindrical intermediate part 31 having opened upper and lower surfaces, and the upper end part 32 coupled to an upper end of the intermediate part 31. The upper end part 32 may have a shape, such as a funnel, which becomes inclined outwards as it goes upwards from the intermediate part 31. The upper end part 32 of the combustion chamber 30 may meet the upper end 111 of the cylinder wall part 11. The upper end part 32 of the combustion chamber 30 and the upper end 111 of the cylinder wall part 11 may be coupled to the insulation part 40 together. Through the coupling relationship, a sealing state of the combustion chamber 30 and a watertight state of the hollow 110 may be maintained.

A bottom plate 312 is coupled to a lower end of the intermediate part 31 of the combustion chamber 30. The bottom plate 312 blocks an opening formed at a lower end of the intermediate part 31. An upper end of the flue tube 50 passes through the bottom plate 312, and the flue tube 50 is coupled to the bottom plate 312.

An outer surface of the intermediate part 31 and an inner surface of the cylinder wall part 11 may be spaced apart from each other. Accordingly, water may flow through the space therebetween.

### Flue Tube 50

The combustion chamber 30 may be communicated with one end of the flue tube 50, which is installed in the outer vessel 10. The hollow 110 may be configured such that heating water may flow around the combustion chamber 30 and the flue tube 50. While the combustion gas generated in the combustion chamber 30 is discharged to an opposite end of the flue tube 50 through the flue tube 50, the water flowing in the hollow 110 around the flue tube 50 and the combustion chamber 30 may receive heat from the combustion gas to be heated and may be discharged.

The flue tube 50 may extend along an upward/downward direction, and the water may flow through an interior thereof. A plurality of flue tubes 50 may be provided, and may have a cylindrical pipe having opened upper and lower surfaces, but a shape thereof is not limited thereto. The plurality of flue tubes 50 may be disposed radially with respect to a center of the bottom plate 312 of the combustion chamber 30, but a disposition of the plurality of flue tubes 50 is not limited thereto.

A baffle plate 83 may be disposed in an interior of the flue tube 50. The baffle plate 83 may be formed to make the combustion gas that passes through the flue tube 50 vortices. The baffle plate 83 may determine a passage, through which the combustion gas flows, and the baffle plate 83 may be formed such that the passage, through which the combustion gas flow, may have a shape that is similar to that of an inner surface of the flue tube 50 as close as possible.

The flue tube 50 is an element configured such that the combustion gas flows in an interior thereof, and as illustrated, the plurality of flue tubes 50 may be disposed in water heating apparatus. The baffle plate 83 may be inserted into the interior of the flue tube 50. An upper end of the flue tube 50 may be communicated with the combustion chamber 30. A lower end of the flue tube 50 passes through the lower tube plate 13 to discharge the combustion gas and is communicated with a space formed between the lower tube plate 13 and a discharge part 60.

As will be described above, because the insulation part 40 is coupled to the combustion chamber 30 and the outer vessel 10 to be easily detachable and the burner 20 that generates blue flames is used, soot may be hardly generated, or soot may be easily cleaned even when it blocks the flue tube 50. Accordingly, as compared with a case, in which the above-described kind of burner is not used and the outer vessel and an upper end structure of the combustion chamber may not easily detached, a more number of flue tubes 50 having a smaller diameter may be disposed in the water heating apparatus 1 according to the embodiment of the present disclosure. Because the number of the flue tubes 50 becomes larger, a higher thermal efficiency may be achieved.

### Processor

The water heating apparatus 1 may include a processor. **The** processor is a constituent element including an element that may perform logical operations for performing a control command, and may include a central processing unit (CPU). The processor may be connected to the elements to transmit signals according to the control commands to the element, and may be connected to the sensors and the acquirers to receive the acquired information in a form of signals. Accordingly, in an embodiment of the present disclosure, the processor may be electrically connected to an air providing part 22, an ignition part 24, a fuel providing part, and the like included in the water heating apparatus 1. Because the processor may be electrically connected to the elements, it may be connected to the elements by wire or may further include a communication module that may perform communication wirelessly for mutual communications. The processor may be coupled to an outer box.

The water heating apparatus 1 may further include a storage medium, and control commands performed by the processor may be stored in the storage medium to be utilized. The storage medium may be a device such as a hard disk drive (HDD), a solid state drive (SSD), a server, a volatile medium, or a nonvolatile medium, but the kinds thereof are not limited thereto. In addition, the storage medium may further store data that is necessary to allow the processor to perform an operation.

### Discharge Part 60

The discharge part 60 is coupled to a lower side of the outer vessel 10. The discharge part 60 is configured to discharge the condensate and the combustion gas. A space formed between the discharge part 60 and the lower tube plate 13 may be communicated with the flue tube 50.

A condensate receiver 61 may be located on a lower side of the lower tube plate 13 to guide the condensate to one side when the condensate drops from the flue tube 50. Accordingly, to guide the condensate by using a self-weight thereof, the condensate receiver 61 may have a shape that is inclined downwards with respect to a direction that extends to one side that is perpendicular to the upward/downward direction.

The combustion gas may be condensed to generate the condensate. The condensate may be generated in the flue tube 50. While the combustion gas passes through the flue tube 50 downwards, heat is transferred to the water located in the hollow 110 and the combustion gas may be condensed when it reaches a lower side of the flue tube 50. Because the condensate formed through the condensation may drop downwards due to the self-weight thereof as the flue tube extends along the upward/downward direction, it may drop into the condensate receiver 61. The combustion gas may also flow downwards to reach a space between the condensate receiver 61 and the lower tube plate 13.

The discharge part 60 may include a discharge opening 63. The discharge opening 63 may be disposed on one side of the condensate receiver 61 to function to receive the condensate guided by the condensate receiver 61 and discharge the received condensate to an outside downwards. A trap may be disposed in the discharge opening 63 such that the combustion gas is prevented from being discharged through the discharge opening 63, and a neutralization device may be disposed to neutralize and discharge the acid condensate.

The discharge part 60 may include a duct 62. The duct 62 is a passage configured to discharge the combustion gas that has passed through the condensate receiver 61 to the outside. The duct 62 may be formed of a pipe type extending along the upward/downward direction and may be disposed on an upper side of the discharge opening 63, but a shape and a location thereof are not limited thereto.

The discharge part 60 may include a duct rib 64. The duct rib 64 is a part that protrudes from the duct 62 outwards, and may be seated on a rib support 82 coupled to the outer vessel 10 or the outer box to stably support the duct.

The discharge part 60 includes a duct adapter 65. The duct adapter 65 is an adapter connected to the duct 62 and to an air supply connection pipe. The duct adapter 65 may be connected to a gas duct connected to an outside of the outer box. The gas duct may be formed of a dual pipe form, in which two pipes that draw concentric circles form one pipe, and the combustion gas may be discharged through an inner pipe and air may be supplied from an outside of the outer box through a space between an outer surface of the inner pipe and an inner surface of the outer pipe. The duct adapter 65 also is formed of a dual pipe form, and a space between the outer pipe and the inner pipe of the gas duct may be connected to an air supply connection pipe that connects the insulation part 40 and the duct adapter 65 so that the inner pipe of the gas duct is connected to the duct 62. Accordingly, by using the duct adapter 65, the combustion gas may be exhausted and supplied at the same time through the one gas duct. Furthermore, the air supplied by using residual heat of the combustion gas may be primarily preheated.

### Insulation Part 40

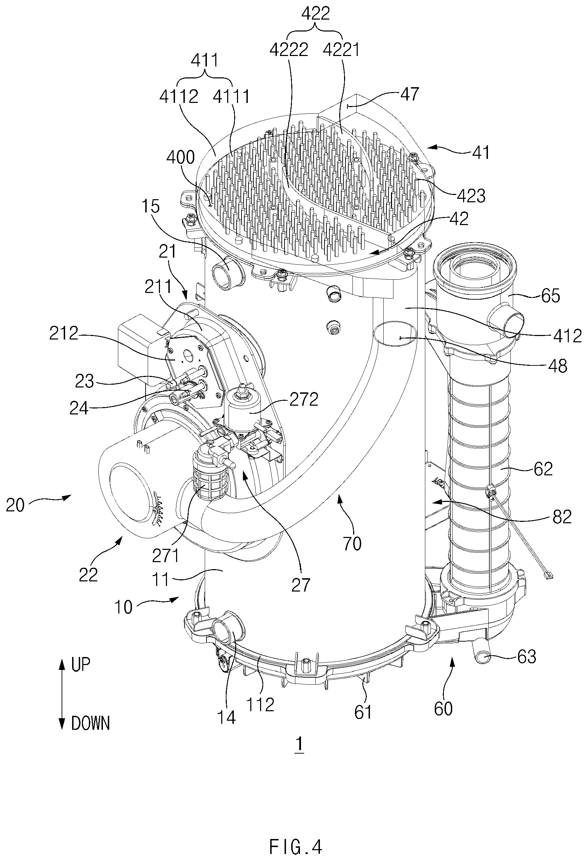

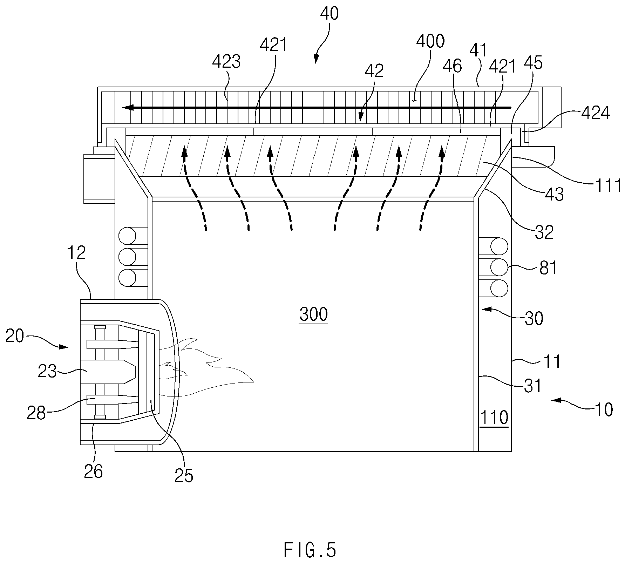

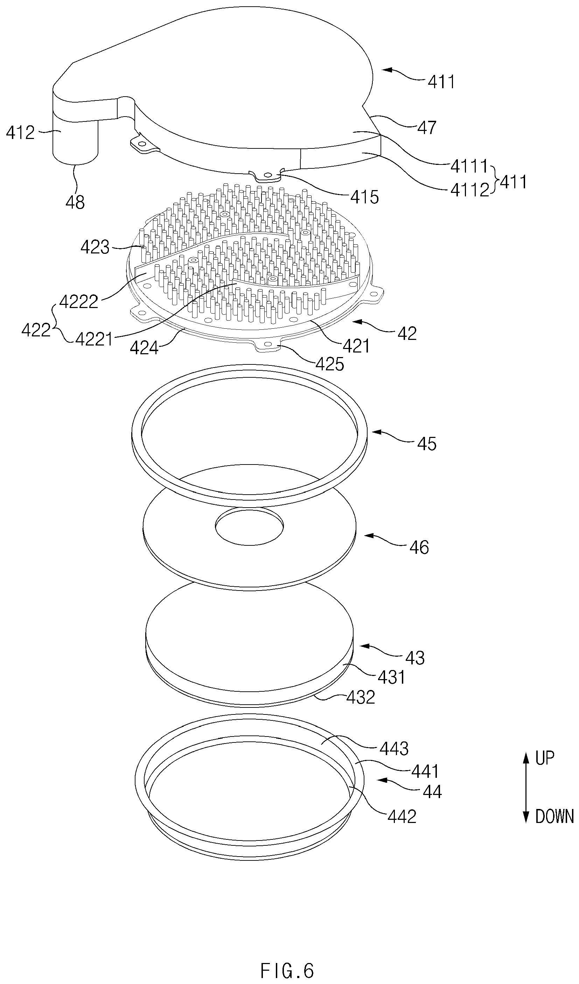

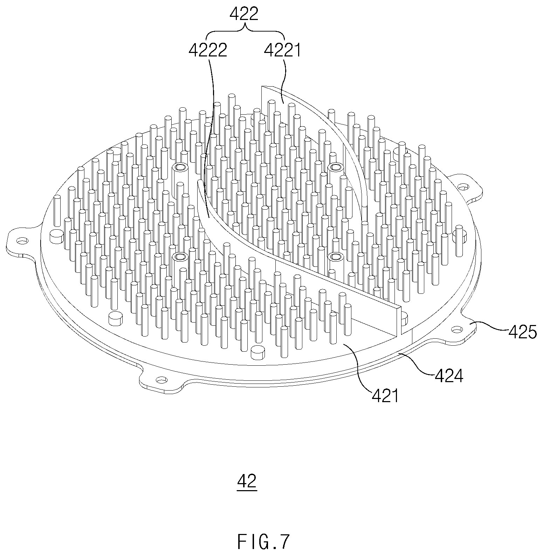

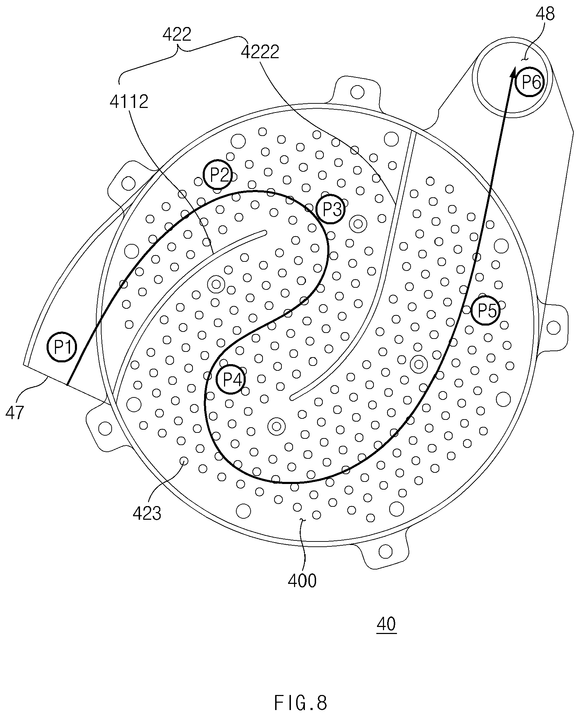

FIG. 4 is a perspective view illustrating an internal structure of the insulation part 40 of the water heating apparatus 1 such that the intemal structure is exposed to an outside according to an embodiment of the present disclosure. FIG. 5 is an enlarged view of a portion of a longitudinal sectional view of the water heating apparatus 1 according to an embodiment of the present disclosure. FIG. 6 is an exploded perspective view of the insulation part 40 of the water heating apparatus 1 according to an embodiment of the present disclosure. FIG. 7 is a perspective view of an air cooling plate 42 of the water heating apparatus 1 according to an embodiment of the present disclosure. FIG. 8 is a view illustrating the insulation part 40 when viewed from a top side to a bottom side while an upper plate thereof is removed according to an embodiment of the present disclosure.

The insulation part 40 may be coupled to an upper end of the combustion chamber 30 to insulate the combustion chamber 30. The insulation part 40 may have an air cooling structure, through which air passes, to insulate the combustion chamber 30. The air provided to the insulation part 40 may be air that is to be supplied to the burner 20. Accordingly, the air that is to be supplied to the burner 20 may pass through the insulation part 40 to be used for insulation of the combustion chamber 30, and then may be provided to the burner 20. Because the insulation part 40 is present, the water heating apparatus 1 according to the embodiment of the present disclosure requires no castable and thus may have a light weight as a weight thereof is reduced, and other structures, in which the water heating apparatus 1 is seated or installed, may be neither overheated nor thermally deformed due to the overheating.

Because the air is used for insulation, the heat generated in the combustion chamber 30 may be transferred and the air may be heated. Accordingly, the water heating apparatus 1 according to the embodiment of the present disclosure may preheat the air that is to be provided to the burner 20 such that the air may be suitable for the burner 20 without using any separate preheating device. The air may be preheated primarily while passing through the gas duct and the duct adapter 65, and may be preheated secondarily while passing through the insulation part 40 and may be supplied to the burner 20. Accordingly, the air may be supplied at a temperature that is suitable for use, and thus an efficiency of the burner 20 may be increased.

The insulation part 40 is connected to the duct adapter 65 through the air supply connection pipe. One end of the air supply connection pipe is connected to the duct adapter 65 and an opposite end of the air supply connection pipe is connected to an insulation inlet 47, whereby the air is delivered to the insulation part 40.

The insulation part 40 is connected to the burner 20 through an air supply pipe 70. The water heating apparatus 1 includes the air supply pipe 70. The air supply pipe 70 is configured to supply the air from the insulation part 40 to the burner 20, and may be formed of a pipe type or may be formed of a flexible hose. One end of the air supply pipe 70 is connected to an insulation outlet 48 and an opposite end of the air supply pipe 70 is connected to the air providing part 22, whereby the air is supplied to the burner 20. That is, the air introduced into the insulation part 40 through the insulation inlet 47 may flow in an interior of the insulation part 40 through the insulation passage to carry out cooling, and then may be discharged through the insulation outlet 48.

The insulation part 40 includes the air cooling plate 42 and a cover 41. Because the cover 41 covers the air cooling plate 42 and the cover 41 is coupled to the air cooling plate 42, the insulation passage may be formed between the air cooling plate 42 and the cover 41. The air cooling plate 42 may be coupled to the combustion chamber 30, and the cover 41 may be coupled to the air cooling plate 42 while covering the air cooling plate 42 from an upper side to a lower side. An air cooling coupling part 425 that protrudes outwards from a high-temperature side plate 421 included in the air cooling plate 42, and a cover coupling part 415 that protrudes outwards from a circumferential wall 4112 included in the cover 41 may overlap each other, and both the two coupling parts 415 and 425 have a hole, to which an insulation coupler 84 may be coupled, and thus the insulation coupler 84 may couple the two coupling parts 415 and 425. The two coupling parts 415 and 425 may further overlap an outer vessel coupling part 16 having a hole, which protrudes outwards from the upper end 111 of the cylinder wall part 11, and may be coupled to each other by the insulation coupler 84. Accordingly, because the above-described coupling parts 16, 415, and 425 may be coupled to each other by the one insulation coupler 84, they may be coupled easily, and also may be simply disassembled only by raising the insulation part 40 after the insulation coupler 84 is released. Because they may be easily disassembled, the insulation part 40 may be easily separated to perform cleaning even though soot gathers in the flue tube 50.

The cover 41 may include a cover wall part 411. The cover wall part 411 is a part that covers the air cooling plate 42, and may include the circumferential wall 4112 and a low-temperature side plate 4111. The low-temperature side plate 4111 may be a plate that is spaced upwards apart from the high-temperature side plate 421 and has a plate shape that is perpendicular to the upward/downward direction. A lower surface of the low-temperature side plate 4111 may referred to as a low-temperature side surface. The low-temperature side plate 4111 may be located on the uppermost side of the insulation part 40, and may meet exterior air to be cooled. The circumferential wall 4112 may protrude downward along a circumference of the low-temperature side plate 4111, and may be formed to define a side surface of an insulation space 400. A lower end of the circumferential wall 4112 may contact a high-temperature side surface that is an upper surface of the high-temperature side plate 421.

The cover 41 may include a tubular insulation outlet pipe 412. The insulation outlet pipe 412 may have the insulation outlet 48. The insulation outlet pipe 412 may be connected to the air supply pipe 70 such that the air that has passed through the insulation part 40 is delivered to the air supply pipe 70. The insulation inlet 47 may be formed on one side of the cover 41. However, when the cover is seated in the air cooling plate, an insulation inlet may be formed between the cover and the air cooling plate.

The air cooling plate 42 may include the high-temperature side plate 421 that has a plate shape that is perpendicular to the upward/downward direction. The high-temperature side plate 421 may have a disk shape. The high-temperature side plate 421 may cover the opening of the upper end of the combustion chamber 30.

The air cooling plate 42 may include a cooling fin 423. A plurality of cooling fins 423 may be provided. The cooling fins may connect the high-temperature side surface and the low-temperature side surface that is opposite to the high-temperature side surface. The cooling fin 423 may have a cylindrical shape that protrudes upwards from the high-temperature side plate 421. An upper end of the protruding cooling fin 423 may contact the low-temperature side plate 4111. The plurality of cooling fins 423 may be disposed to be spaced apart from each other. As the cooling fins 423 are disposed, a heat transfer area becomes larger whereby the combustion chamber 30 due to the air may easily exchange heat. Furthermore, the cooling fins 423 contact the low-temperature side plate 4111 that meets exterior air, and thus the heat may be transferred to the low-temperature side plate 4111 to be cooled by the exterior air.

The cover 41 and the air cooling plate 42 may constitute an outer wall that surrounds the insulation space 400. That is, the insulation space 400 is provided inside the outer wall. The air cooling plate 42 may include a partition wall 422 disposed in the insulation space 400. The partition wall 422 may protrude upwards from the high-temperature side plate 421, may contact an inner surface of the circumferential wall 4112 of the outer wall, and may contact an inner surface of the low-temperature side plate 4111.

The partition wall 422 may include a first partition wall 4221 and a second partition wall 4222. When viewed from a top, the partition walls may have a curved profile. The partition walls 4221 and 4222 may extend inwards from different locations of the inner surface of the circumferential wall 4112. The first partition wall 4221 may be located adjacent to the insulation inlet 47, and the second partition wall 4222 may be located adjacent to the insulation outlet 48. In sequence, the air may flow along a space between the circumferential wall 4112 and the first partition wall 4221, a space between the first partition wall 4221 and the second partition wall 4222, and a space between the second partition wall 4222 and the circumferential wall 4112.

Accordingly, a path of the air, which is formed by the partition wall 422 in the insulation space 400 defined by the outer wall, is the insulation passage. The insulation passage that is a path, in which the air introduced from the outside flows to the burner 20, may be defined by the inner surface of the outer wall and the outer surface of the partition wall 422.

The insulation passage may have a curved shape due to the partition wall 422. The insulation passage is indicated by thick arrows in FIGS. 5 and 8. The air may contact the high-temperature side surface of a maximally wide area while flowing along the curved insulation passage. A cross-sectional area at the outlet of the insulation passage may be larger than a cross-sectional area at the inlet of the insulation passage. The cross-sectional area of the insulation passage becomes larger as it goes from the inlet toward the outlet. That is, the cross-sectional areas at P1, P2, P3, P4, P5, and P6 that are locations on the insulation passage indicated in FIG. 8 may become larger as they go from P1 to P6.

P1 may be a location of the insulation inlet 47. P2 is a location shortly before a direction of the air introduced into the insulation part 40 is primarily changed. P3 may be a location immediately after the direction of the introduced air is primarily changed. P4 may be a location shortly before the direction of the air, the direction of which has been primarily changed, is secondarily changed. P5 may be a location after the direction of the air is secondarily changed. P6 may be a location of the insulation outlet 48.

When it is assumed that the cross-sectional area of P1 is 100%, the cross-sectional area of P2 may be 106% to 100%, and may be preferably 108%. The cross-sectional area of P3 may be 114% to 118% of the cross-sectional area of P1, and may be preferably 116%. The cross-sectional area of P4 may be 121% to 125% of the cross-sectional area of P1, and may be preferably 123%. The cross-sectional area of P5 may be 129% to 133% of the cross-sectional area of P1, and may be preferably 131%. The cross-sectional area of P6 may be 137% to 141% of the cross-sectional area of P1, and may be preferably 139%. Because the cross-sectional area of the insulation passage becomes larger as it goes from the inlet to the outlet, an air supply resistance against the burner 20 may be decreased, whereby a load of the air providing part 22, which is to receive the air via the insulation passage, may be reduced.

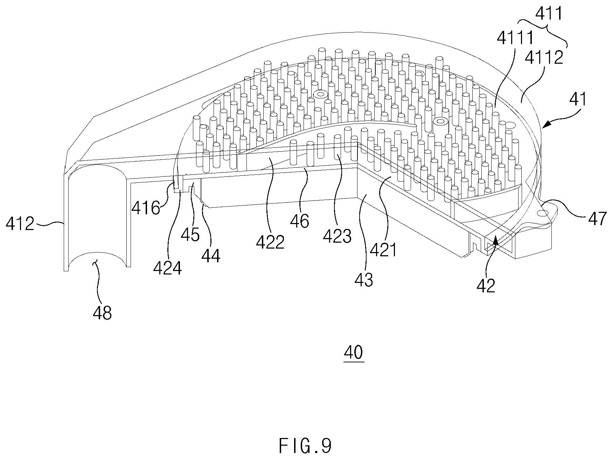

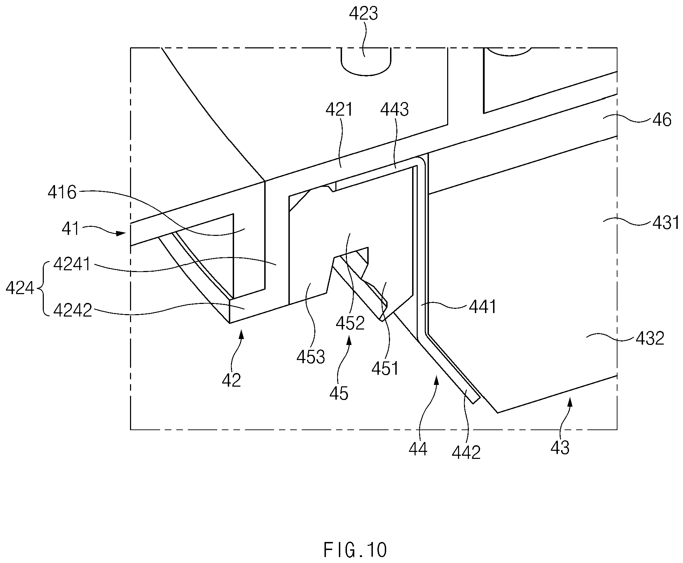

FIG. 9 is a perspective view illustrating a cutting surface and an internal structure of the insulation part 40 after a portion of the insulation part 40 is cut, according to an embodiment of the present disclosure. FIG. 10 is an enlarged detailed view illustrating a portion of FIG. 9.

The cover 41 may include a cover flange 416. The cover flange 416 may protrude downwards from the cover wall part 411. The air cooling plate 42 may include an air cooling flange 424 that protrudes downwards from the high-temperature side plate 421. The air cooling flange 424 may include an air cooling flange vertical part 4241 that protrudes downwards from a circumference of the high-temperature side plate 421, and an air cooling flange horizontal part 4242 that protrudes outwards from a lower end of the air cooling flange vertical part 4241. The cover flange 416 may be seated in the air cooling flange horizontal part 4242. The inner surface of the cover flange 416 may contact an outer surface of the air cooling flange vertical part 4241. Due to the contact structure, a sealing state at a border of the cover 41 and the air cooling plate 42 may be maintained.

The insulation part 40 may include an insulator 43. The insulator 43 may be disposed between the air cooling plate 42 and the combustion chamber 30 to insulate the combustion chamber 30. Because the insulation is made by the insulator 43, as indicated by an arrow of a broken line in FIG. 5, the heat rising from the combustion chamber 30 may be hindered from being transferred to the insulation space 400. The insulator 43 may be formed of a material including glass wool or urethane foam for insulation, but a kind thereof is not limited thereto.

The insulator 43 may include an insulation body 431 and an insulation tapered part 432. The insulation body 431 may have a disk shape. The insulation tapered part 432 may have a tapered shape that protrudes downwards from a low end of the insulation body 431 and of which a cross-sectional area that is obtained by cutting it on a plane that is perpendicular to the upward/downward direction decreases as it goes downwards. The insulation tapered part 432 may have the shape, and the insulator 43 may be easily inserted into a tapered opening formed at an upper portion of the combustion chamber 30.

The insulation part 40 may include a fixing member 44. The fixing member 44 may be coupled to a lower surface of the air cooling plate 42, which faces the combustion chamber 30. The fixing member 44 includes a stopper wall 442, by which a surface of the insulator 43, which faces the combustion chamber 30, may be stopped such that the insulator 43 is prevented from dropping and being separated into the interior of the combustion chamber 30. The stopper wall 442 may surround the insulation tapered part 432 while contacting an inclined surface of the insulation tapered part 432, and prevent the insulator 43 from being separated from the air cooling plate 42 by supporting the inclined surface upwards from a lower side.

The fixing member 44 may surround the insulator 43, and may not cover the lower surface of the insulator 43. The fixing member 44 may include an annular fixed vertical part 441 that surrounds an outer surface of the insulation body 431. The fixing member 44 may include a fixed horizontal part 442 that protrudes outwards from an upper end of the fixed vertical part 441. The fixed horizontal part 442 may contact a lower surface of the high-temperature side plate 421, and may be coupled to the high-temperature side plate 421 to be fixed.

The insulation part 40 may include a press plate 46. The press plate 46 may be disposed between the insulator 43 and the air cooling plate 42 to press the insulator 43 against the fixing member 44. Because the press plate 46 is disposed between the high-temperature side plate 421 and the insulator 43, the insulator 43 is sandwiched between the press plate 46 and the stopper wall 442. Accordingly, the press plate 46 and the stopper wall 442 may press the insulator 43 inwards with respect to the upward/downward direction to fix the insulator 43. The press plate 46 may have a plate shape, such as a doughnut, which has a hole that is opened upwards and downwards at a center thereof, but a shape thereof is not limited thereto.

The insulation part 40 may include an insulation packing 45. The insulation packing 45 may be disposed between the combustion chamber 30 and the air cooling plate 42 to seal the combustion chamber 30. The insulation packing 45 may be formed of a material having elasticity, and may contact the upper end of the combustion chamber 30, the upper end 111 of the cylinder wall part 11, and the high-temperature side plate 421 to prevent a leakage that may occur therebetween. The insulation packing 45 may have an annular shape to surround the fixing member 44 and the insulator 43.

The insulation packing 45 may include a packing inner part 451, a packing upper part 452, and a packing outer part 453. The packing inner part 451 may contact an outer surface of the fixed vertical part 441. The packing upper part 452 may extend outwards from an upper end of the packing inner part 451. The packing upper part 452 may contact a lower surface of a fixed horizontal part 443 and a lower surface of the high-temperature side plate 421. The packing outer part 453 may extend downwards from an outside of the packing upper part 452. The packing outer part 453 may contact an inner surface of the air cooling flange 424. The insulation packing 45 may have a U-shaped cross-section, which is opened toward a lower side, and the upper end of the combustion chamber 30 and the upper end 111 of the cylinder wall part 11 may be inserted into the inside of the insulation packing 45 to contact the insulation packing 45. Elements located on an upper side of the water heating apparatus 1 may contact the insulation packing 45 to maintain a sealing state.

A plurality of wings, such as bosses, may protrude outwards from the packing inner part 451, the packing upper part 452, and the packing outer part 453, whereby a sealing state between the insulation packing 45 and other elements may be maintained more easily.

### Burner 20

The burner 20 is configured to cause a combustion reaction by using the air and the fuel. The fuel used by the burner 20 of the water heating apparatus 1 may be of an oil type. A distal end of the burner 20 that ejects the fuel may be located in the combustion chamber 30 to cause a combustion reaction in the combustion space 300 of the combustion chamber 30. The burner 20 may be inserted into the burner guide 12 along the reference direction "D", and may pass through the outer vessel 10 and the combustion chamber 30.

The burner 20 may be configured to generate blue flames. The burner 20 may include the following elements to form the flames.

The burner 20 may include a fuel nozzle 23, the ignition part 24, and the air providing part 22. The burner 20 may further include a housing 21, a flame holder 25, a tube frame 28, the blower tube 26, and a fuel pump 27.

The housing 21 is an element that, after surrounding the elements of the burner 20 or being coupled to the elements, is coupled to the outer vessel 10 to fix relative locations of the elements of the burner 20 with respect to the outer vessel 10. The housing 21 may include a combustion chamber cover 211, to which the air providing part 22 and a flame forming part are coupled, and which is coupled to the outer vessel 10 to cover the opening of the combustion chamber 30, and a flame forming cover 212 that is coupled to the combustion chamber cover 211 to cover the flame forming part. Furthermore, a blower coupling part 213 configured such that the air providing part 22 is coupled to the outside of the outer vessel 10 may be formed in the combustion chamber cover 211.

The fuel pump 27 is a device that pumps the fuel received from the outside or stored in a separate fuel tank to the fuel nozzle 23 through a fuel supply pipe 273. Accordingly, the fuel pump 27 may include a fuel pressure forming part 271 including a device, such as a fuel impeller 224, which may compress the fuel, and a fuel motor 272 that generates power, by which the fuel pressure forming part 271 may be driven as it is driven by electric power, and provides the generated power.

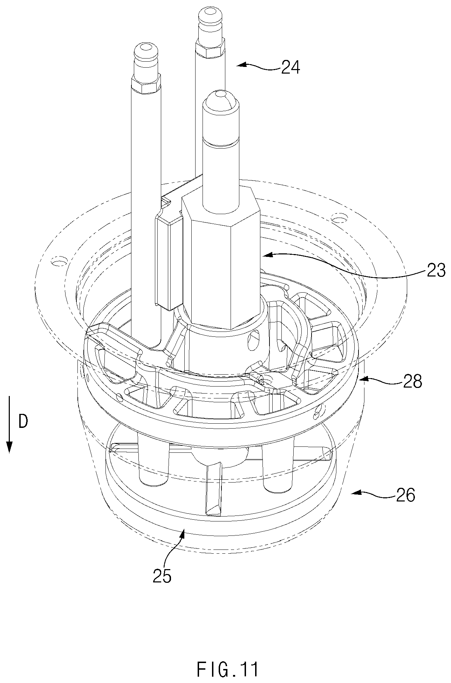

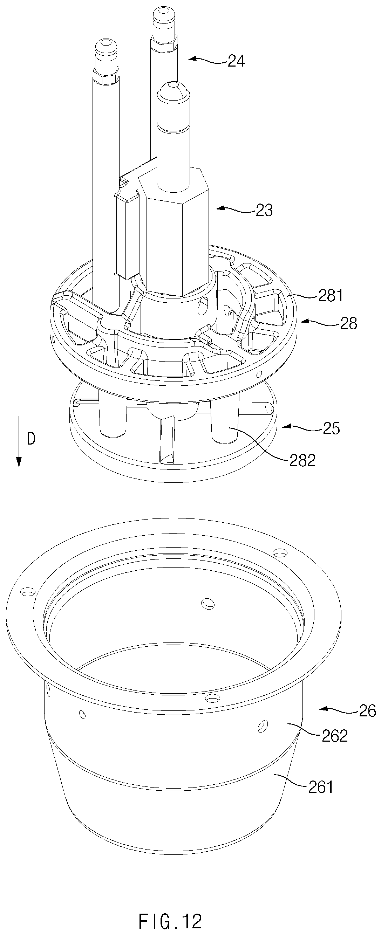

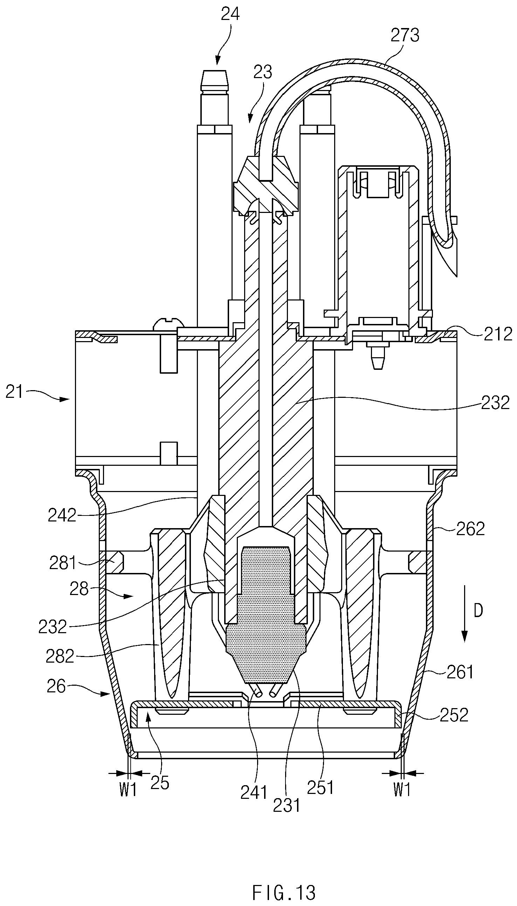

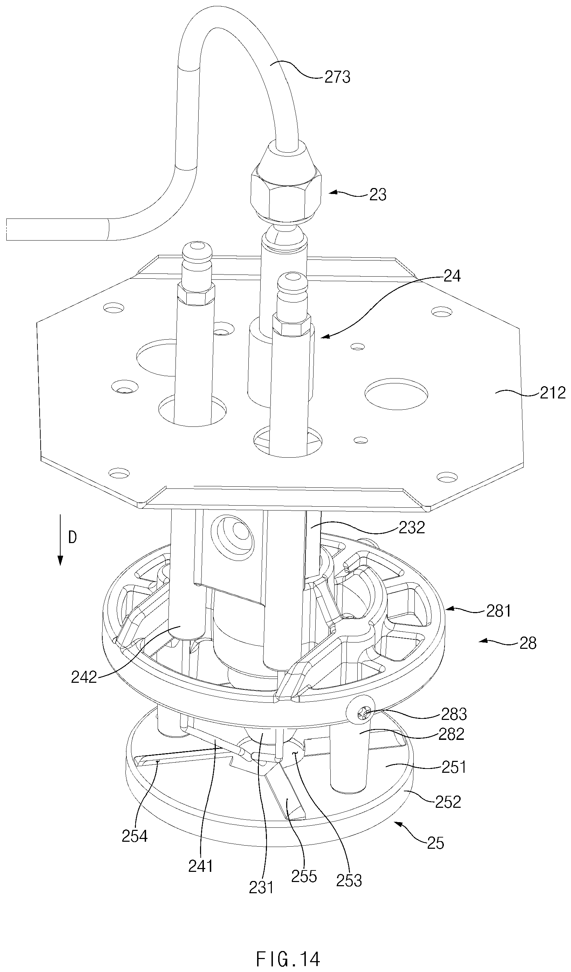

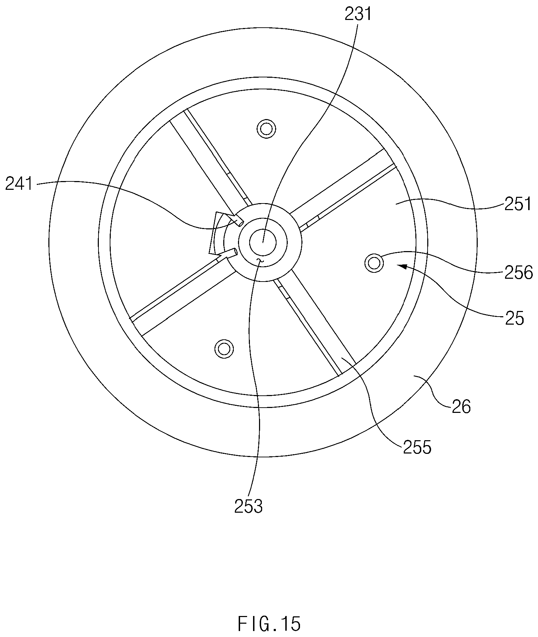

FIG. 11 is a perspective view illustrating a flame forming part of the water heating apparatus 1 such that an intemal structure thereof is exposed, according to an embodiment of the present disclosure. FIG. 12 is a perspective view illustrating a situation, in which the blower tube 26 is disassembled from the flame forming part of the water heating apparatus 1, according to an embodiment of the present disclosure. FIG. 13 is a longitudinal sectional view of the flame forming part of the water heating apparatus 1 according to an embodiment of the present disclosure. FIG. 14 is a perspective view illustrating the flame holder 25, the ignition part 24, the fuel nozzle 23, and the flame forming cover 212 of the water heating apparatus 1 according to the embodiment of the present disclosure. FIG. 15 is a bottom view of the flame forming part of the water heating apparatus 1 according to an embodiment of the present disclosure.

The flame forming part may include the flame holder 25, the tube frame 28, the blower tube 26, the fuel providing part, and the ignition part 24. The fuel and the air are mixed in the flame forming part to generate flames, and the flames may be disposed in the combustion space 300 of the combustion chamber 30.

### Flame Forming Part-Fuel Nozzle 23

The fuel providing part is an element that provides the fuel for the combustion reaction, and may include the fuel nozzle 23 and the fuel pump 27. The fuel nozzle 23 is an element that provides the fuel of an oil type to the combustion space 300. Accordingly, the fuel nozzle 23 may be connected to the fuel pump 27 through the fuel supply pipe 273, may receive the fuel of the oil type from the fuel pump 27, and may spray the fuel into the combustion space 300 at a pressure, at which the fuel pump 27 pumps the fuel. Let's assume that a direction, in which the fuel is sprayed into the combustion space 300 by the fuel nozzle 23, is the reference direction "D". The reference direction "D" is one direction that crosses the upward/downward direction, and may be a direction, in which the burner 200 is inserted into the outer vessel 10, and may be a direction, in which the fuel nozzle 23 extends.

A flow rate of the fuel sprayed by the fuel nozzle 23 may be determined by the fuel pump 27. The fuel nozzle 23 may pass through the flame forming cover 212. A nozzle inner end 231 that is a distal end on a side of the fuel nozzle 23, which is close to the reference direction "D" and is a part, in which the outlet from which the fuel is ejected is formed, may be located inside the burner guide 12, and may have a shape, which extends from a cylindrical nozzle body 232 that passes through the housing 21 along the reference direction "D", and of which a cross-sectional area on a cross-section obtained by cutting it on a plane that is perpendicular to the reference direction "D" becomes smaller.

### Flame Forming Part-Ignition Part 24

The ignition part 24 is an element that ignites a mixture material, in which the sprayed fuel and the ejected air are mixed. Although it has been described in the embodiment of the present disclosure that the ignition part 24 is an ignition plug, a device that performs ignition in a method other than the ignition plug may be used as the ignition part 24. The ignition part 24 may cause an electric spark to ignite the mixture material. As the electric spark is caused in a situation, in which the fuel of the oil type is sprayed and the air is ejected and the fuel and the air are mixed to form the mixture material, the flames may be formed.

A plug body 242 may pass through the housing 21 along the reference direction "D", and a distal end of the ignition part 24, which is opposite to the reference direction "D", may be electrically connected to a processor or a power source. A plug inner end 241 that is a distal end of the ignition part 24, which is close to the reference direction "D", may be disposed adjacent to the nozzle inner end 231. When viewed along the reference direction "D", the fuel nozzle 23 may be disposed at a center of the blower tube 26, and the ignition part 24 may be disposed around the fuel nozzle 23. The plug inner end 241 may have a shape that is inclined in a direction that becomes closer to the nozzle inner end 231 as it goes from the plug body 242 along the reference direction "D". The spark may be formed at the plug inner end 241.

### Flame Forming Part-Blower Tube 26

The blower tube 26 is a part that surrounds the fuel nozzle 23 inserted into the burner guide 12 and a portion of the ignition part 24 and is connected to the air providing part 22. The blower tube 26 may have an interior space, in which the air pumped by the air providing part 22 flows, and a discharge opening that is an opening that is opened toward the combustion space 300. Accordingly, the fuel sprayed by the fuel nozzle 23 and the air pumped by the air providing part 22 may be discharged to the combustion space 300 through the discharge opening, and the flames may be formed while the spark is caused. At least a portion of the discharge opening may be covered by the flame holder 25.

The blower tube 26 may include a direct pipe part 262, which has a cylindrical external appearance, and of which a distal end that is opposite to the reference direction "D" is coupled to the housing 21. The blower tube 26 may include a tapered part 261 that is a part, of which a cross-sectional area of a cross-section obtained by cutting it on a plane that is perpendicular to the reference direction "D" as it goes from a distal end of the direct pipe part, which is close to the reference direction "D" along the reference direction "D". That is, the tapered part 261 may correspond to a distal end area of the tube that is adjacent to a distal end of the blower tube 26, which is close to the reference direction "D". The flame holder 25 may be disposed inside the tapered part 261. The tube frame 28 may be disposed inside the direct pipe part 262, and the tube frame 28 may be coupled to an inner surface of the direct pipe part 262.

An inner surface of the tapered part 261 of the blower tube 26 and an outer surface of the flame holder 25 may be spaced apart from each other by a specific interval. That is, the blower tube 26 and the flame holder 25 may not contact each other, and the entire discharge opening may not be covered by the flame holder 25. The specific interval may be not less than 0.8 mm and not more than 1.8 mm, but may become different according to a calorie generated by the burner 20 or other characteristics. When the blower tube 26 and the flame holder 25 are viewed along the reference direction "D", the discharge opening and the flame holder 25 may form concentric circles.

### Flame Forming Part-Tube Frame 28

The tube frame 28 is an element that is disposed to fix relative locations of the elements in the flame forming part. The tube frame 28 may include a tube connector 281 coupled to an inner surface of the direct pipe part 262 of the blower tube 26, and a holder connector 282 coupled to the tube connector 281 and coupled to the flame holder 25. Accordingly, the tube frame 28 may be configured such that the blower tube 26 and the flame holder 25 are spaced apart from each other while not contacting each other, and relative locations thereof that may draw concentric circles when viewed along the reference direction "D" may be maintained.

The tube connector 281 may have a disk shape to be coupled to an inner surface of the direct pipe part 262 while contacting the inner surface of the direct pipe part 262. An opening may be formed at a center of the tube connector 281 such that the fuel nozzle 23 may be inserted into and fixed to the opening. The tube connector 281 may be coupled to the direct pipe part 262 of the blower tube 26 by using a frame coupler. The holder connector 282 may have a shape, such as a column, to protrude from the tube connector 281 along the reference direction "D" to be coupled to the flame holder 25, and a plurality of holder connectors 282 may be disposed to stably support the flame holder 25. A distal end of the holder connector 282, which is close to the reference direction "D", may be inserted into a coupling hole 256 formed in the flame holder 25, or may be coupled to the insulation coupler 84 inserted into the coupling hole 256 to be coupled to the flame holder 25.

Because the tube frame 28 is adapted to maintain a relative location relationship between the blower tube 26 and the flame holder 25, a plurality of holes may be formed to reduce a weight thereof. The ignition part 24 may pass through one of the holes.

In an exemplary burner, the flame holder and the blower tube may be coupled to each other by a medium of a plurality of elements to maintain relative locations thereof. Accordingly, the relative locations of the flame holder and the blower tube may be different by an accumulated tolerance according to a coupling relationship of the elements of the flame holder and the blower tube. In the flame forming part of the burner 20 according to the embodiment of the present disclosure, the relative locations of the blower tube 26 and the flame holder 25 may be uniformly maintained while not influenced by the coupling relationships of the other elements by disposing the tube frame 28 that directly connects the blower tube 26 and the flame holder 25 inside the blower tube 26.

### Flame Forming Part-Flame Holder 25

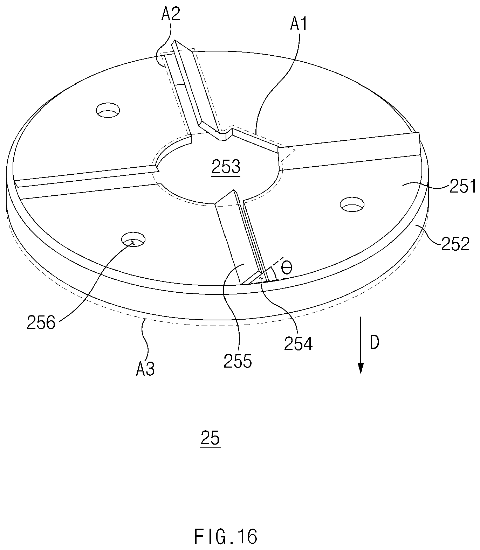

FIG. 16 is a perspective view of the flame holder 25 of the water heating apparatus 1 according to an embodiment of the present disclosure.

The flame holder 25 is an element disposed to smoothly form flames. The flame holder 25 may include a holder plate 251 and a holder circumferential part 252. The flame holder 25 may further include a central opening 253, a vortex opening 254, the coupling hole 256, and a vortex wing 255, which are formed in the holder plate 251.

The holder plate 251 is an element that has a plate shape and is disposed to at least partially cover the discharge opening formed in the blower tube 26. Although it is illustrated in the embodiment of the present disclosure that the holder plate 251 has a disk shape that is perpendicular to the reference direction "D", a shape thereof is not limited thereto.

The holder circumferential part 252 is a part that extends from a circumference of the holder plate 251 along the reference direction "D" and, may have an annular shape that protrudes in the reference direction "D" along a circumference of the holder plate 251 because the holder plate 251 has a disk shape in the embodiment of the present disclosure. However, a shape of the holder circumferential part 252 is not limited thereto.

A distal end of the holder circumferential part 252, which is close to the reference direction "D", may be disposed at a location that is spaced apart from a distal end of the blower tube 26, which is close to the reference direction "D", by a specific interval along an opposite direction to the reference direction "D". The above-described specific interval may be not less than 2.3 times to not more than 3.6 times as large as a distance that reaches the holder plate 251 from the fuel nozzle 23 along the reference direction "D".

In the flame holder 25, due to the tube frame 28, an outer surface of the holder circumferential part 252 may be disposed at a location that is spaced apart from an inner surface corresponding to a distal end area of the blower tube 26, by a spacing interval W1 of a specific interval. The tube frame 28 may fix the flame holder 25 and the blower tube 26 such that the smallest interval of the spacing interval between an outer surface of the flame holder 25 and an inner surface of the tapered part 261 may be the spacing interval W1. Accordingly, an annular circumferential opening having a thickness of the spacing interval W1 may be formed between the outer surface of the holder circumferential part 252 and the inner surface of the blower tube 26. In FIG. 16, an area corresponding to the circumferential opening is denoted by A3.

The central opening 253 is an opening formed at a center of the holder plate 251 such that the fuel sprayed by the fuel nozzle 23 reaches the combustion space 300. The air may be discharged through the central opening 253. The central opening 253 may be circular, but may have an imperfect circular shape, of which a portion of a circumference is linear as illustrated. The central opening 253 may include a circular area and a protrusion area. The circular area is a part that is circular and is connected to the plurality of vortex openings 254. The protrusion area is a part that protrudes from a portion of a circumference of the circular area to a radially outer side of the circular area. A distal end of the ignition part 24, which is close to the reference direction "D", may be located adjacent to the protrusion area. However, a shape of the central opening 253 is not limited thereto. In FIG. 16, an area corresponding to the central opening 253 is denoted by A1.

The vortex opening 254 is another opening formed in the holder plate 251, and a plurality of vortex openings 254 may be formed. The vertex openings 254 may be formed radially around the central opening 253. Although it has been described in the embodiment of the present disclosure that four vortex openings 254 are disposed while defining an equal angle of 90 degrees, the number and a disposition thereof are not limited thereto. As the vortex openings 254 are formed, the air provided to the blower tube 26 by the air providing part 22 may form the flames together with the fuel while flowing into the combustion space 300 and forming vortices. In FIG. 16, an area corresponding to the vortex openings 254 is denoted by A2.

The vortex wing 255 is a part disposed in the holder plate 251 adjacent to the vertex openings 254. The number of the vortex wings 255 may correspond to the number of the vortex openings 254. The vortex wing 255 may protrude from a circumference of the vortex opening 254, and may be disposed to guide the air such that the air discharged through the vortex opening 254 is rotated in the same direction.

The vortex wing 255 may protrude from a circumference of the vortex opening 254 to an outside of the combustion space 300, that is, in an opposite direction to the reference direction "D". The vortex wing 255 may be inclined in one direction with respect to the opposite direction to the reference direction "D". In detail, when the flame holder 25 is viewed along the reference direction "D", the circumference of the vortex opening 254 may have a clockwise corner and a counterclockwise corner that extend radially from the central opening 253. The plurality of vortex wings 255 may have shapes that protrude from, the clockwise corners or the counterclockwise corners of the plurality of vortex openings 254, corners in a common direction, and are inclined in the counterclockwise direction or the clockwise direction with respect to the opposite direction to the reference direction "D". Accordingly, when the flame holder 25 is viewed along the reference direction "D", the vortex wing 255 may at least partially cover the vortex opening 254. In the embodiment of the present disclosure, which is illustrated in the drawings, the plurality of vortex wings 255 have shapes that protrude from the clockwise corners of the plurality of vortex openings 254 and are inclined in a counterclockwise direction with respect to the opposite direction to the reference direction "D".

An angle of θ that is defined between the vortex wing 255 and the holder plate 251 may be not less than 20 degrees and not more than 45 degrees, and may be preferably 30 degrees. When θ is smaller than 20 degrees, an excessively strong vortex may be formed and an amount of air becomes larger, whereby an ignition performance may be lowered. Meanwhile, when θ is larger than 45 degrees, the vortices become very weak and the amount of the air is very small, whereby the ignition performance may be lowered. Accordingly, the vortex wings 255 may be formed such that a suitable ratio of the air and the fuel may be formed.

Due to the shapes of the vortex wings 255 and the vortex openings 254, the air discharged from the interior space of the blower tube 26 via the flame holder 25 may form vortices along the shapes of the vortex wings 255, and may form the mixture material better together with the sprayed fuel. Accordingly, the flames may be formed smoothly, and a lifting phenomenon of the flames being separated from the flame holder 25 may be reduced.

The coupling hole 256 may be formed in the holder plate 251 to be coupled to the holder connector 282 of the above-described tube frame 28. A plurality of coupling holes 256 may be formed, and may form an equal interval and an equal angle with respect to a center of the holder plate 251 such that the flame holder 25 is supported to be balanced.

Let's assume that, when the air and the fuel are provided by the air providing part 22 and the fuel providing part, a total sum of a flow rate of the gas that passes the central opening 253, a flow rate of the gas that passes through the plurality of vortex opening 254, and a flow rate of the gas that passes through the circumferential opening is a total pass flow rate. A value obtained by dividing the flow rate of the gas that passes through the central opening 253 by the total pass flow rate may be not less than 0.285 and not more than 0.395. A value obtained by dividing the flow rate of the gas that passes through the plurality of vortex opening 254 by the total pass flow rate may be not less than 0.131 and not more than 0.181. A value obtained by dividing the flow rate of the gas that passes through the circumferential opening by the total pass flow rate may be not less than 0.424 and not more than 0.584. The central opening 253, the plurality of vortex openings 254, the circumferential opening, and the plurality of vortex wings 255 may be formed such that the flow rates are distributed, and the blower tube 26 and the flame holder 25 may be fixed through the tube frame 28.

An area of the plurality of vortex openings 254 may be larger than an area of the central openings 253 and an area of the circumferential opening. When a total sum of the area of the plurality of vortex openings 254, the area of the central opening 253, and the area of the circumferential opening is a total opening area, a value obtained by dividing the area of the central opening 253 by the total opening area may be not less than 0.235 and not more than 0.287.

An exemplary water heating apparatus having a central opening of an area that is larger than the area of the central opening 253 of the water heating apparatus 1 according to the embodiment of the present disclosure may be considered. Due to a difference between the areas of the central opening 253, the fuel and the air may be discharged fast to easily generate blue flames in the water heating apparatus 1 according to the embodiment of the present disclosure as compared with the exemplary water heating apparatus. However, accordingly, a danger of generating the lifting phenomenon increases, and in the water heating apparatus 1 according to the embodiment of the present disclosure, the angle defined by the vortex wings 255 and the holder plate 251 is formed as described above, and thus a strong vortex is formed to stably form blue flames. Furthermore, the flow rates in the central opening 253, the vortex openings 254, and the circumferential opening are distributed as described above, and thus the blue flames may be stably formed.

### Air Providing Part 22

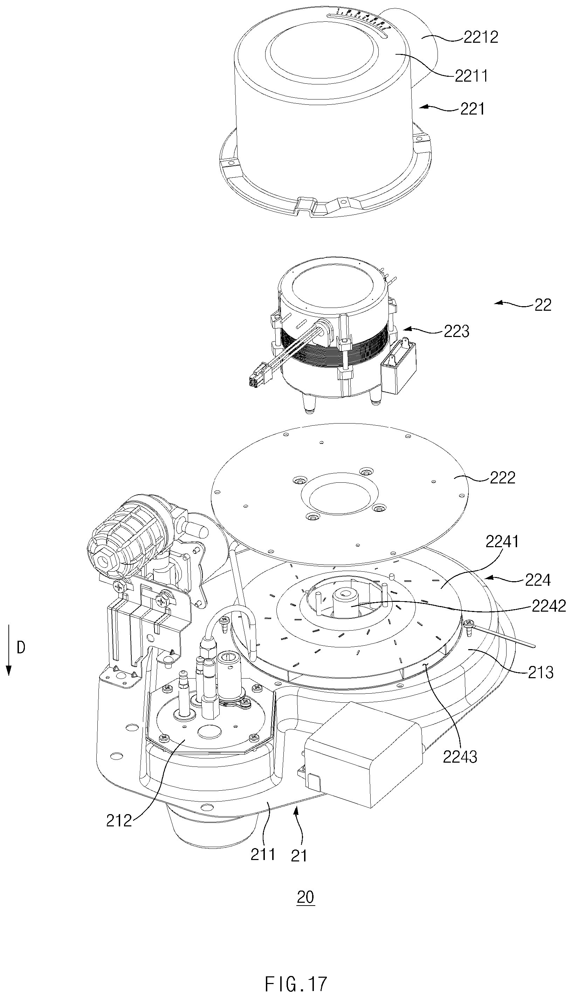

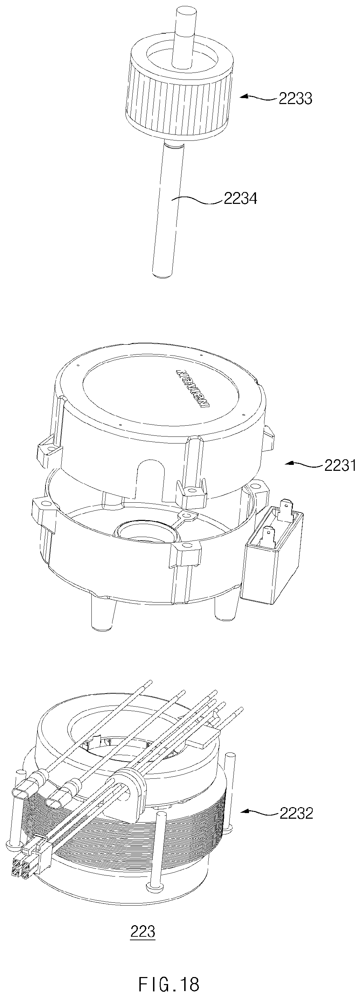

FIG. 17 is an exploded perspective view illustrating parts related to the air providing part 22 in the burner 20 of the water heating apparatus 1 according to an embodiment of the present disclosure. FIG. 18 is an exploded perspective view of the air providing part 22 of the water heating apparatus 1 according to an embodiment of the present disclosure.

The air providing part 22 is a device for pumping the air supplied from the outside to the combustion space 300. Accordingly, the air providing part 22 may be a blower. The air providing part 22 may include the impeller 224 for compressing the air and delivering the compressed air to the blower tube 26, and a blower motor 223 that generates rotational driving power for rotating the impeller 224 and transmitting the rotational driving power to the impeller 224. The air providing part 22 may include an impeller cover 222 that may cover the impeller 224 installed in the blower coupling part 213, and a motor cover 221 that covers the blower motor 223 seated in the impeller cover 222.

The motor cover 221 may be formed such the blower motor 223 is installed in an interior thereof. The motor cover 221 may be coupled and fixed to the housing 21 while the blower motor 223 is installed therein. The motor cover 221 may include a motor installation part 2211, in which the blower motor 223 is installed, and an air introduction part 2212 that is a passage, through which the air is introduced from an outside. The air may be introduced from the outside into the motor installation part 2211 through the air introduction part 2212, and the introduced air may be delivered to the impeller 224 to be pumped to the blower tube 26.

The blower motor 223 may include a stator 2232, a shaft 2234, a rotor 2233, and a motor frame. The stator 2232 and the rotor 2233 may be disposed in the motor frame, and the motor frame may be coupled to the impeller cover 222 to fix the blower motor 223 to other elements. The stator 2232 may have an annular shape and may be formed in a form, in which a plurality of conductive coils are wound. The rotor 2233 may be inserted into an opening that is formed at a center of the stator 2232 to be opened along the reference direction "D", and may be formed of a conductive material. When an electric voltage is applied to the blower motor 223, the rotor 2233 may be rotated while the reference direction "D" is taken as an axial direction due to an electromagnetic cooperation of the stator 2232 and the rotor 2233.

The shaft 2234 that extends along the reference direction "D" is inserted into the center of the rotor 2233. The shaft 2234 may be coupled to a power transmission part 2242 of the impeller 224 that will be described below, and may transmit rotation of the rotor 2233 to the impeller 224. That is, the impeller 224 also may be rotated while the reference direction "D" is taken as the axis direction.

The impeller cover 222 may have an annular plate shape. The impeller cover 222 may be coupled to the housing 21 while covering the impeller 224 installed in the blower coupling part 213. The blower motor 223 may be coupled to an upper surface of the impeller cover 222, and the motor cover 221 may be coupled. The air introduced through the motor cover 221 may be delivered to the center of the impeller 224 through a hole formed at a center of the impeller cover 222. The shaft 2234 may pass through the hole formed at the center of the impeller cover 222 to be coupled to the power transmission part 2242 of the impeller 224.

The impeller 224 is rotated to compress and send the introduced air. Accordingly, the impeller 224 may have a special shape, and may be formed by disposing a plurality of spiral wings, which are spaced apart from each other, on an outer surface of a body having a smooth conic or circular truncated cone shape. However, a shape of the impeller 224 is not limited thereto.

An inlet of the impeller 224 is an area corresponding to an apex of a cone or an upper surface of a circular truncated cone. An annular hole between the power transmission part 2242 and a shroud 2241, which is formed at the center of the impeller 224 according to the embodiment of the present disclosure, may act as an inlet of the impeller 224. The air introduced through the inlet of the impeller 224 may be delivered to an outlet of the impeller 224 formed in a radial direction of the impeller 224 through a space between wings as the impeller 224 is rotated, and may be discharged in a compressed state. The impeller 224 may further include the shroud 2241 that covers the wings. An air passage that communicates the blower coupling part 213 and the blower tube 26 may be formed in the housing 21. The outlet of the impeller 224 may send the compressed air to the air passage.

The air providing part 22 may be controlled such that the air is pumped at a plurality of different wind speeds. The processor may control the air providing part 22 such that the air providing part 22 is operated in a low step or a high step. The processor may provide currents of different magnitudes to the blower motor 223 to perform a control such that the blower motor 223 is operated in a low step or a high step. In the low step, the processor may provide a specific low-step current to the blower motor 223, and in the high step, the processor may provide a high-step current that is higher than the low-step current to the blower motor 223. The processor may control the air providing part 22 such that the blower motor 223 is operated in the low step at a time of ignition and is operated in the high step after the ignition.

The low step means a state, in which the blower motor 223 is rotated at a low-step speed such that the air is provided at a low-step wind speed that is a specific wind speed. The low-end speed may be determined by a low-step air ratio of the burner 20 or a calorie generated. The high step means a state, in which the blower motor 223 is rotated at a high-step speed that is higher than the low-step speed such that the air is provided at a high-step wind speed that is higher than the low-step wind speed. Here, the low-step speed may be a speed corresponding to 20% to 60% of the high-step speed. For example, the low-step speed may be not less than 1400 RPM and not more than 2600 RPM, and the high-step speed may be not less than 3000 RPM and not more than 3400 RPM. Because the air providing part 22, as described above, may be controlled differently at and after the ignition time point, a lifting phenomenon of flames that may be caused by the excessively strong wind speed of the air during the ignition may be prevented, and the air may be provided at a strong wind speed to obtain a high calorie even after the ignition.

Although it may have been described until now that all the elements constituting the embodiments of the present disclosure are coupled to one or coupled to be operated, the present disclosure is not essentially limited to the embodiments. That is, without departing from the purpose of the present disclosure, all the elements may be selectively coupled into one or more elements to be operated. Furthermore, because the terms, such as "comprising", "including", or "having" may mean that the corresponding element may be included unless there is a specially contradictory description, it should be construed that another element is not extruded but may be further included. In addition, unless defined otherwise, all terms used herein, including technical or scientific terms, have the same meanings as those generally understood by those skilled in the art to which the present disclosure pertains. The terms, such as the terms defined in dictionaries, which are generally used, should be construed to coincide with the context meanings of the related technologies, and are not construed as ideal or excessively formal meanings unless explicitly defined in the present disclosure.

Accordingly, blocking of the flue tube due to soot may be reduced, and castable is not necessary whereby the water heating apparatus may be light-weighted.

The above description is a simple exemplification of the technical spirits of the present disclosure, and the present disclosure may be variously corrected and modified by those skilled in the art to which the present disclosure pertains without departing from the essential features of the present disclosure. Accordingly, the embodiments disclosed in the present disclosure is not provided to limit the technical spirits of the present disclosure but provided to describe the present disclosure, and the scope of the technical spirits of the present disclosure is not limited by the embodiments. Accordingly, the technical scope of the present disclosure should be construed by the attached claims, and all the technical spirits within the equivalent ranges fall within the scope of the present disclosure.

## Claims

1. A water heating apparatus comprising:
a burner (20) configured to cause a combustion reaction by using a fuel and air;
a combustion chamber (30) configured such that flames generated due to the combustion reaction is located therein;
an outer vessel (10), in which the combustion chamber (30) is provided at an upper portion thereof, and in which water is provided; the outer vessel (10) including: a cylinder wall part (11) having opened upper and lower surfaces; and a lower tube plate (13) coupled to the cylinder wall part (11) while covering a lower end of the cylinder wall part (11); a flue tube (50) communicating with a lower end of the combustion chamber (30) such that combustion gas generated due to the combustion reaction flows therethrough, and installed in the outer vessel (10) such that the water flowing outside the flue tube (50) is heated by the combustion gas, wherein a lower end of the flue tube (50) passes through the lower tube plate (13), and wherein the combustion chamber (30) is coupled to an upper end of the cylinder wall part (11), **characterized in that**: the outer vessel (10) further includes a burner guide (12) having an opening that passes through the cylinder wall part (11) along one direction that crosses an upward/downward direction and having a part that protrudes from the cylinder wall part (11), and the burner (20) is coupled to the outer vessel (10) and the combustion chamber (30) through the burner guide (12).

2. The water heating apparatus of claim 1, further comprising:
an insulation part (40) coupled to an upper end of the combustion chamber(30) to insulate the combustion chamber(30).

3. The water heating apparatus of claim 2, wherein the insulation part(40) is configured such that the air provided to the burner(20) passes therethrough to insulate the combustion chamber(30).

4. The water heating apparatus of claim 3, wherein the insulation part(40) includes:
an outer wall having an insulation space(400) in an interior thereof; and
a partition wall(422) formed in the insulation space(400), and
wherein an insulation passage that is a path, in which the air introduced from the outside flows to the burner(20), is defined by an inner surface of the outer wall and an outer surface of the partition wall(422).

5. The water heating apparatus of claim 4, wherein a cross-section at an outlet of the insulation passage is larger than a cross-section at an inlet of the insulation passage.

6. The water heating apparatus of claim 4, wherein the insulation passage has a curved shape.

7. The water heating apparatus of claim 4, wherein the insulation part(40) further includes:
a plurality of cooling fins(423) connecting a high-temperature side surface located on a side of the inner surface of the outer wall, which is close to the combustion chamber(30), and a low-temperature side surface facing the high-temperature side surface.

8. The water heating apparatus of claim 7, wherein the partition wall(422) contacts the inner surface of the outer wall.

9. The water heating apparatus of claim 3, wherein the insulation part(40) includes:
an air cooling plate(42) coupled to the combustion chamber(30); and
a cover(41) coupled to the air cooling plate(42) while covering the air cooling plate(42) to form an insulation passage in an interior thereof.

10. The water heating apparatus of claim 9, wherein the insulation part(40) further includes:
an insulator(43) disposed between the air cooling plate(42) and the combustion chamber(30) to insulate the combustion chamber(30).

11. The water heating apparatus of claim 10, wherein the insulation part(40) further includes:
a fixing member(44) coupled to a surface of the air cooling plate(42), which faces the combustion chamber(30), and including a stopper wall, by which a surface of the insulator(43), which faces the combustion chamber(30), is stopped such that the insulator(43) is prevented from deviating to an interior of the combustion chamber(30).

12. The water heating apparatus of claim 11, wherein the insulation part(40) further includes:
a press plate(46) disposed between the insulator(43) and the air cooling plate(42) to press the insulator(43) against the fixing member(44).

13. The water heating apparatus of claim 9, wherein the insulation part(40) further includes:
an insulation packing(45) disposed between the combustion chamber(30) and the air cooling plate(42) to maintain a sealing state of the combustion chamber(30).

14. The water heating apparatus of claim 2, wherein the combustion chamber(30) has an opening covered by the insulation part(40) on an upper side thereof.

15. A water heating apparatus comprising:
a burner (20) configured to cause a combustion reaction by using a fuel and air;
a combustion chamber (30) configured such that flames generated due to the combustion reaction is located therein;
an outer vessel (10) configured such that water and the combustion chamber(30) are provided therein; and
a flue tube (50) communicating with the combustion chamber (30) such that combustion gas generated due to the combustion reaction flows therethrough, and installed in the outer vessel (10) such that the water flowing outside the flue tube (50) is heated by the combustion gas; and a discharge part (60) coupled to the outer vessel (10), **characterized in that**: the water heating apparatus further comprises an insulation part (40) coupled to the combustion chamber (30) and configured such that the air to be supplied to the burner (20) passes therethrough to insulate the combustion chamber (30), wherein the discharge part (60) comprises a duct adapter (65), wherein an air supply connection pipe connects an insulation inlet (47) of the insulation part (40) and the duct adapter (65) of the discharge part (60), and wherein an air supply pipe (70) connects an insulation outlet (48) of the insulation part (40) and the burner (20) to supply the air from the insulation part (40) to the burner (20).

## Patentansprüche

1. Wasserheizgerät, umfassend:
einen Brenner (20), der dazu konfiguriert ist, eine Verbrennungsreaktion unter Verwendung eines Brennstoffs und von Luft hervorzurufen;
eine Brennkammer (30), die derart konfiguriert ist, dass sich Flammen, die auf Grund der Verbrennungsreaktion entstehen, darin befinden;
einen Außenbehälter (10), in dem die Brennkammer (30) an einem oberen Abschnitt desselben bereitgestellt wird, und in dem Wasser bereitgestellt wird; wobei der Außenbehälter (10) umfasst: einen Zylinderwandteil (11), der offene obere und untere Oberflächen aufweist; und einen unteren Rohrboden (13), der mit dem Zylinderwandteil (11) gekoppelt ist und dabei ein unteres Ende des Zylinderwandteils (11) abdeckt; ein Rauchrohr (50), das mit einem unteren Ende der Brennkammer (30) in Verbindung steht, so dass ein Verbrennungsgas, das auf Grund der Verbrennungsreaktion entsteht, durch dieses hindurch strömt, und das in dem Außenbehälter (10) derart installiert ist, dass das Wasser, das außerhalb des Rauchrohrs (50) fließt, durch das Verbrennungsgas erhitzt wird, wobei ein unteres Ende des Rauchrohrs (50) durch den unteren Rohrboden (13) hindurch geht, und wobei die Verbrennungskammer (30) mit einem oberen Ende des Zylinderwandteils (11) gekoppelt ist,
**dadurch gekennzeichnet, dass**: der Außenbehälter (10) ferner eine Brennerführung (12) umfasst, die eine Öffnung aufweist, die durch den Zylinderwandteil (11) in einer Richtung hindurch geht, die eine Aufwärts-/Abwärts-Richtung kreuzt, und einen Teil aufweist, der von dem Zylinderwandteil (11) vorsteht, und der Brenner (20) mit dem Außenbehälter (10) und der Brennkammer (30) durch die Brennerführung (12) hindurch gekoppelt ist.

2. Wasserheizgerät nach Anspruch 1, ferner umfassend:
einen Isolierteil (40), der an einem oberen Ende der Brennkammer (30) gekoppelt ist, um die Brennkammer (30) zu isolieren.

3. Wasserheizgerät nach Anspruch 2, wobei der Isolierteil (40) derart konfiguriert ist, dass die Luft, die dem Brenner (20) bereitgestellt wird, durch diesen hindurch geht, um die Brennkammer (30) zu isolieren.

4. Wasserheizgerät nach Anspruch 3, wobei der Isolierteil (40) umfasst:
eine Außenwand, die einen Isolierraum (400) im Innern derselben aufweist; und
eine Trennwand (422), die in dem Isolierraum (400) gebildet ist, und
wobei sich ein Isolierdurchgang, bei dem es sich um einen Weg handelt, auf dem die Luft, die von außen eingeführt wird, zum Brenner (20) strömt, durch eine Innenfläche der Außenwand und eine Außenfläche der Trennwand (422) definiert ist.

5. Wasserheizgerät nach Anspruch 4, wobei ein Querschnitt an einem Auslass des Isolierdurchgangs größer als ein Querschnitt an einem Einlass des Isolierdurchgangs ist.

6. Wasserheizgerät nach Anspruch 4, wobei der Isolierdurchgang eine gekrümmte Form aufweist.

7. Wasserheizgerät nach Anspruch 4, wobei der Isolierteil (40) ferner umfasst:
eine Vielzahl von Kühlrippen (423), die eine Hochtemperatur-Seitenfläche, die sich auf einer Seite der Innenfläche der Außenwand befindet, die nahe an der Brennkammer (30) liegt, und eine Tieftemperatur-Seitenfläche, die der Hochtemperatur-Seitenfläche gegenüber steht, verbinden.

8. Wasserheizgerät nach Anspruch 7, wobei die Trennwand (422) mit der Innenfläche der Außenwand in Kontakt kommt.

9. Wasserheizgerät nach Anspruch 3, wobei der Isolierteil (40) umfasst:
eine Luftkühlplatte (42), die mit der Brennkammer (30) gekoppelt ist; und
eine Abdeckung (41), die mit der Luftkühlplatte (42) gekoppelt ist und dabei die Luftkühlplatte (42) abdeckt, um einen Isolierdurchgang darin zu bilden.

10. Wasserheizgerät nach Anspruch 9, wobei der Isolierteil (40) ferner umfasst:
einen Isolierkörper (43), der zwischen der Luftkühlplatte (42) und der Brennkammer (30) angeordnet ist, um die Brennkammer (30) zu isolieren.

11. Wasserheizgerät nach Anspruch 10, wobei der Isolierteil (40) ferner umfasst:
ein Befestigungselement (44), das mit einer Oberfläche der Luftkühlplatte (42) gekoppelt ist, die der Brennkammer (30) gegenübersteht, und umfassend eine Sperrwand, durch die eine Oberfläche des Isolierkörpers (43), die der Brennkammer (30) gegenübersteht, gesperrt wird, um zu verhindern, dass der Isolierkörper (43) zum Innern der Brennkammer (30) abweicht.

12. Wasserheizgerät nach Anspruch 11, wobei der Isolierteil (40) ferner umfasst:
eine Druckplatte (46), die zwischen dem Isolierkörper (43) und der Luftkühlplatte (42) angeordnet ist, um den Isolierkörper (43) gegen das Befestigungselement (44) zu drücken.

13. Wasserheizgerät nach Anspruch 9, wobei der Isolierteil (40) ferner umfasst:
eine Isolierdichtung (45), die zwischen der Brennkammer (30) und der Luftkühlplatte (42) angeordnet ist, um einen Dichtigkeitszustand der Brennkammer (30) zu bewahren.

14. Wasserheizgerät nach Anspruch 2, wobei die Brennkammer (30) eine Öffnung aufweist, die von dem Isolierteil (40) auf einer oberen Seite derselben abgedeckt ist.

15. Wasserheizgerät, umfassend:
einen Brenner (20), der dazu konfiguriert ist, eine Verbrennungsreaktion unter Verwendung eines Brennstoffs und von Luft hervorzurufen;
eine Brennkammer (30), die derart konfiguriert ist, dass sich Flammen, die auf Grund der Verbrennungsreaktion entstehen, darin befinden;
einen Außenbehälter (10), der derart konfiguriert ist, dass Wasser und die Brennkammer (30) darin bereitgestellt werden; und
ein Rauchrohr (50), das mit der Brennkammer (30) derart in Verbindung steht, dass ein Verbrennungsgas, das auf Grund der Verbrennungsreaktion entsteht, durch dieses hindurch strömt, und das in dem Außenbehälter (10) derart angeordnet ist, dass das Wasser, das außerhalb des Rauchrohrs (50) fließt, durch das Verbrennungsgas erhitzt wird; und einen Ausströmteil (60), der mit dem Außenbehälter (10) gekoppelt ist,
**dadurch gekennzeichnet, dass**: das Wasserheizgerät ferner einen Isolierteil (40) umfasst, der mit der Brennkammer (30) gekoppelt ist, und derart konfiguriert ist, das die Luft, die dem Brenner (20) bereitzustellen ist, durch dieses hindurch geht, um die Brennkammer (30) zu isolieren, wobei der Ausströmteil (60) einen Leitungsadapter (65) umfasst, wobei ein Luftzufuhrverbindungsrohr einen Isoliereinlass (47) des Isolierteils (40) und den Leitungsadapter (65) des Ausströmteils (60) verbindet, und wobei ein Luftzufuhrrohr (70) einen Isolierauslass (48) des Isolierteils (40) und den Brenner (20) verbindet, um die Luft von dem Isolierteil (40) dem Brenner (20) zuzuführen.

## Revendications

1. Appareil de chauffage d'eau, comprenant :
un brûleur (20) configuré pour provoquer une réaction de combustion en utilisant un combustible et de l'air ;
une chambre de combustion (30) configurée de telle sorte que des flammes générées en raison de la réaction de combustion se trouvent à l'intérieur de celle-ci ;
un récipient extérieur (10) dans lequel la chambre de combustion (30) est prévue au niveau d'une portion supérieure de celui-ci, et dans lequel de l'eau est prévue ; le récipient extérieur (10) comprenant : une partie de paroi de cylindre (11) présentant des surfaces supérieures et inférieures ouvertes ; et une plaque tubulaire inférieure (13) couplée à la partie de paroi de cylindre (11) tout en couvrant une extrémité inférieure de la partie de paroi de cylindre (11) ; un tube de fumée (50) en communication avec une extrémité inférieure de la chambre de combustion (30) de sorte qu'un gaz de combustion généré dû à la réaction de combustion circule à travers celui-ci, et qui est installé dans le récipient extérieur (10) de telle sorte que l'eau s'écoulant à l'extérieur du tube de fumée (50) est chauffée par le gaz de combustion, dans lequel une extrémité inférieure du tube de fumée (50) passe à travers la plaque tubulaire inférieure (13), et dans lequel la chambre de combustion (30) est couplée à une extrémité supérieure de la partie de paroi de cylindre (11),
**caractérisé en ce que** : le récipient extérieur (10) comprend en outre un guide-brûleur (12) présentant une ouverture qui passe à travers la partie de paroi de cylindre (11) suivant une direction qui croise une direction ascendante/descendante et présente une partie qui fait saillie à partir de la partie de paroi de cylindre (11), et le brûleur (20) est couplé au récipient extérieur (10) et à la chambre de combustion (30) à travers le guide-brûleur (12).

2. Appareil de chauffage d'eau selon la revendication 1, comprenant en outre :
une partie d'isolation (40) couplée à une extrémité supérieure de la chambre de combustion (30) pour isoler la chambre de combustion (30).

3. Appareil de chauffage d'eau selon la revendication 2, dans lequel la partie d'isolation (40) est configurée de telle sorte que l'air fourni au brûleur (20) passe à travers celle-ci pour isoler la chambre de combustion (30).

4. Appareil de chauffage d'eau selon la revendication 3, dans lequel la partie d'isolation (40) comprend :
une paroi extérieure présentant un espace d'isolation (400) dans un intérieur de celle-ci ; et
une paroi de séparation (422) formée dans l'espace d'isolation (400), et
dans lequel un passage d'isolation, qui est un chemin sur lequel l'air introduit depuis l'extérieur circule jusqu'au brûleur (20), est défini par une surface intérieure de la paroi extérieure et une surface extérieure de la paroi de séparation (422).

5. Appareil de chauffage d'eau selon la revendication 4, dans lequel une section transversale au niveau d'une sortie du passage d'isolation est plus grande qu'une section transversale au niveau d'une entrée du passage d'isolation.

6. Appareil de chauffage d'eau selon la revendication 4, dans lequel le passage d'isolation présente une forme courbe.

7. Appareil de chauffage d'eau selon la revendication 4, dans lequel la partie d'isolation (40) comprend en outre :
une pluralité d'ailettes de refroidissement (423) reliant une surface latérale haute température située sur un côté de la surface intérieure de la paroi extérieure, qui est près de la chambre de combustion (30), et une surface latérale basse température faisant face à la surface latérale haute température.

8. Appareil de chauffage d'eau selon la revendication 7, dans lequel la paroi de séparation (422) entre en contact avec la surface intérieure de la paroi extérieure.

9. Appareil de chauffage d'eau selon la revendication 3, dans lequel la partie d'isolation (40) comprend :
une plaque de refroidissement par air (42) couplée à la chambre de combustion (30) ; et
un recouvrement (41) couplé à la plaque de refroidissement par air (42) tout en couvrant la plaque de refroidissement par air (42) pour former un passage d'isolation à l'intérieur de celle-ci.

10. Appareil de chauffage d'eau selon la revendication 9, dans lequel la partie d'isolation (40) comprend en outre :
un isolant (43) disposé entre la plaque de refroidissement par air (42) et la chambre de combustion (30) pour isoler la chambre de combustion (30).

11. Appareil de chauffage d'eau selon la revendication 10, dans lequel la partie d'isolation (40) comprend en outre :
un élément de fixation (44) couplé à une surface de la plaque de refroidissement par air (42), qui fait face à la chambre de combustion (30), et comprenant une paroi d'arrêt, par laquelle une surface de l'isolant (43), qui fait face à la chambre de combustion (30), est arrêtée de façon à empêcher l'isolant (43) de dévier vers l'intérieur de la chambre de combustion (30).

12. Appareil de chauffage d'eau selon la revendication 11, dans lequel la partie d'isolation (40) comprend en outre :
une plaque de pression (46) disposée entre l'isolant (43) et la plaque de refroidissement par air (42) pour pousser l'isolant (43) contre l'élément de fixation (44).

13. Appareil de chauffage d'eau selon la revendication 9, dans lequel la partie d'isolation (40) comprend en outre :
une garniture d'isolation (45) disposée entre la chambre de combustion (30) et la plaque de refroidissement d'air (42) pour maintenir un état d'étanchéité de la chambre de combustion (30).

14. Appareil de chauffage d'eau selon la revendication 2, dans lequel la chambre de combustion (30) présente une ouverture couverte par la partie d'isolation (40) sur un côté supérieur de celle-ci.

15. Appareil de chauffage d'eau comprenant :
un brûleur (20) configuré pour provoquer une réaction de combustion en utilisant un combustible et de l'air ;
une chambre de combustion (30) configurée de telle sorte que des flammes générées en raison de la réaction de combustion se trouvent à l'intérieur de celle-ci ;
un récipient extérieur (10) configuré de telle sorte que l'eau et la chambre de combustion (30) sont prévues à l'intérieur de celui-ci ; et
un tube de fumée (50) en communication avec la chambre de combustion (30) de sorte qu'un gaz de combustion généré en raison de la réaction de combustion circule à travers celui-ci, et qui est installé dans le récipient extérieur (10) de telle sorte que l'eau s'écoulant à l'extérieur du tube de fumée (50) est chauffée par le gaz de combustion ; et une partie d'évacuation (60) couplée au récipient extérieur (10),
**caractérisé en ce que** : l'appareil de chauffage d'eau comprend en outre une partie d'isolation (40) couplée à la le chambre de combustion (30) et configurée de telle sorte que l'air à fournir au brûleur (20) passe à travers celui-ci pour isoler la chambre de combustion (30), dans lequel la partie d'évacuation (60) comprend un adaptateur de conduit (65), dans lequel un tuyau de raccordement d'alimentation en air relie une entrée d'isolation (47) de la partie d'évacuation (40) et l'adaptateur de conduit (65) de la partie d'évacuation (60), et dans lequel un tuyau d'alimentation en air (70) relie une sortie d'isolation (48) de la partie d'isolation (40) et le brûleur (20) pour fournir l'air de la partie d'isolation (40) au brûleur (20).
